(19) Europäisches Patentamt
European Patent Office
Office européen des brevets

(11) EP 0 708 807 B1

(12) **EUROPEAN PATENT SPECIFICATION**

(45) Date of publication and mention of the grant of the patent:
**22.09.1999 Bulletin 1999/38**

(21) Application number: **94923458.7**

(22) Date of filing: **11.07.1994**

(51) Int Cl.[6]: **C10G 11/05**, C10G 11/18, B01J 29/08, B01J 29/10, B01J 29/12, B01J 29/06

(86) International application number:
**PCT/US94/07865**

(87) International publication number:
**WO 95/02653 (26.01.1995 Gazette 1995/05)**

# (54) CATALYST SYSTEM AND PROCESS FOR CATALYTIC CRACKING

KATALYSATORSYSTEM UND VERFAHREN ZUM KATALYTISCHEN KRACKEN

SYSTEME CATALYSEUR ET PROCEDE DE CRAQUAGE CATALYTIQUE

(84) Designated Contracting States:
**BE DE FR GB IT NL**

(30) Priority: **16.07.1993 US 92102**

(43) Date of publication of application:
**01.05.1996 Bulletin 1996/18**

(73) Proprietor: **MOBIL OIL CORPORATION**
**Fairfax, Virginia 22037-0001 (US)**

(72) Inventors:
- **BROWN, Barrington, Oliver**
  **Wilmington, DE 19802 (US)**
- **DEGNAN, Thomas, Francis**
  **Moorestown, NJ 08057 (US)**
- **HELTON, Terry, Eugene**
  **Glen Mills, PA 19342 (US)**
- **WOOLERY, Geoffrey, Logan**
  **Sicklerville, NJ 08081 (US)**

(74) Representative: **Kador & Partner**
**Corneliusstrasse 15**
**80469 München (DE)**

(56) References cited:
**US-A- 4 228 036**
**US-A- 4 498 975**
**US-A- 4 740 292**
**US-A- 4 837 396**
**US-A- 4 988 653**
**US-A- 5 055 437**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 708 807 B1

## Description

Many refineries devote extraordinary amounts of energy and operating expense to convert most of a whole crude oil feed into high octane gasoline The crude is fractionated to produce a virgin naphtha fraction which is usually reformed, and a gas oil and/or vacuum gas oil fraction which is catalytically cracked to produce naphtha, and light olefins. The naphtha is added to the refiner's gasoline blending pool, while the light olefins are converted, usually by HF or sulfuric acid alkylation, into gasoline boiling range material which is then added to the gasoline blending pool.

Fluid catalytic cracking (FCc) is a preferred refining process for converting higher boiling petroleum fractions into lower boiling products, especially gasoline. In FCC, a solid cracking catalyst promotes hydrocarbon cracking reactions. The catalyst is in a finely divided form, typically with particles of 20-100 μm, with an average of about 60-75 μm. The catalyst acts like a fluid (hence the designation FCC), and circulates in a closed cycle between a cracking zone and a separate regeneration zone. Fresh feed contacts hot catalyst from the regenerator at the base of a riser reactor. The cracked products are discharged from the riser cracking reactor to pass through a main column which produces several liquid streams and a vapor stream containing large amounts of light olefins. The vapor stream is compressed in a wet gas compressor and charged to the unsaturated gas plant for product purification.

A further description of the catalytic cracking process may be found in the monograph, "Fluid Catalytic Cracking With Zeolite Catalysts," P. B. Venuto and E. .T Habib, Marcel Dekker, New York, 1978.

An earlier process, moving bed cracking or Thermofor Catalytic Cracking (TCC), is still used in some refineries. The catalyst is in the form of small beads, which pass as a moving bed through a reactor and regenerator. The feed and product properties can be the same, but TCC units usually can crack only distilled feeds, whereas FCC can process feeds containing some residual materials.

While FCC is already an efficient process for converting heavy feed to lighter products, substantial modifications to FCC catalysts and hardware are likely to be required as a result of the 1990 Clean Air Act Amendments (CAAA). In particular, it is expected that there will be an increased demand for C3 and C4 olefins for alkylation and C4 and C5 olefins for methyltertbutyl and ethyltertbutyl ethers (MTBE and ETBE) to meet reduced gasoline aromatic and increased gasoline oxygenate requirements. One of the anticipated difficulties will be maintaining gasoline octane while complying with clean air provisions.

There are a number of widely recognized methods to increase light olefin make. For example, one widely accepted method is to substitute an ultrastable Y zeolite for a rare earth exchanged Y zeolite in the base cracking catalyst. Another is to increase the riser top temperature. A third method is to use a secondary or 'quench' stream at some point along the length of the riser. Yet another method is to use a shape-selective zeolite, such as ZSM-5, in combination with the main zeolite Y based cracking catalyst.

There are problems associated with each method of increasing yield of light olefins. Substituting a rare earth-free ultrastable Y zeolite for a rare earth exchanged Y produces a less stable and less active cracking catalyst. Higher riser top temperatures produce more undesirable light products such as methane and ethane and also produce more dienes in the gasoline which lead to gum formation and fouling. Introduction of a quench stream can reduce the fresh feed rate on a unit close to its hydraulic limit. The addition of shape-selective zeolites such as ZSM-5, can greatly increase light olefin yields, but adds to the cost to the operation and, if used at high concentrations, may dilute the 'base' zeolite Y cracking catalyst.

In many refineries addition of the shape-selective zeolite is preferred because it can be carried out with low levels of the shape-selective zeolite and requires no expenditures for new capital or equipment modification. In fact, this would probably be more widely used if the beneficial effects of the ZSM-5 could be obtained with even less ZSM-5.

The use of ZSM-5 in combination with a zeolite Y based catalyst is described in U.S. Patents 3,758,403; 3,769,202; 3,781,226; 3,894,931; 3894,933; 3,894,934; 3,926,782; 4,100,262; 4,309,280; 4,309,279; 4,375,458.

It is well known that improved light olefins (C3 - C4) and improved gasoline octane will be obtained in the catalytic cracking of gas oils if a crystalline zeolite having a pore size of less than 0.7 nm (7 Angstrom units), e.g. ZSM-5, is admixed with a crystalline zeolite a pore size greater than 0.7 nm (7 Angstrom units), either with or without a matrix. A disclosure of this type can be found in U.S. Pat. No. 3,769,202. Although the incorporation of a crystalline zeolite having a pore size of less than 0.7 nm (7 Angstrom units) into a catalyst comprising a larger pore size crystalline zeolite (pore size greater than 0.7 nm (7 Angstrom units)) has indeed been very effective with respect to the raising of octane number, it did so at the expense of the yield of gasoline.

Improved octane number with some loss in gasoline yield was shown in U.S. Pat. No. 3,758,403. In said patent, the cracking catalyst was comprised of a large pore size crystalline zeolite (pore size greater than 0.7 nm (7 Angstrom units)) in admixture with ZSM-5 zeolite, the ratio of ZSM-5 zeolite to large pore size crystalline zeolite was in the range of 1:10 to 3:1.

The use of ZSM-5 zeolite in conjunction with a zeolite cracking catalyst of the X or Y variety is described in U.S. 3,894,931; 3,894,933; 3,894,934 and 4,521,298. The first two patents disclose the use of ZSM-5 zeolite in amounts up to and about 5 to 10 wt.%; the third patent discloses the weight ratio of ZSM-5 zeolite to large pore size crystalline zeolite in the range of 1:10 to 3:1. The fourth utilizes a catalyst inventory wherein the zeolite is unbound.

Combinations of zeolite Y and other zeolites and molecular sieves including crystalline silicoaluminophosphates (SAPOs) have also shown potential for increasing light olefins and octane at the expense of gasoline yield. Most of the evaluations were undertaken with the assumption that small changes in the diameter or shape of the pore might produce significant changes in selectivity. To date, the commercial application of crystalline materials other than ZSM-5 as octane cracking catalysts appears to be limited. The scientific and patent literature includes references to the evaluation of at least four other shape selective aluminosilicate zeolites as FCC additives. These are: offretite (US 4,992,400), ZSM-23, ZSM-35 (4,016,245) and ZSM-57 (US 5,098,555) Non-zeolitic molecular sieve patents teach the use of SAPO-5 (US 4,791,083; EP 0 202 304 B1), SAPO-11 (US 4,791,083) and SAPO-37 (US 4,842,714; 4,681,864) in FCC applications.

There are also references to the use of zeolite beta in combination with zeolite Y catalysts as a means for improving gasoline octane and producing light olefins. Thus, for example, Chen et al., in US 4,740,292 and in US 4,911,823, incorporated by reference, describe the use of REY + zeolite beta as an effective means to improve the octane of gasoline while increasing the yield of C3/C4 olefins.

US-A-4,988,653 and 5,055,437 disclose cracking processes employing a catalyst comprising a large-pore zeolite, which may be zeolite Y, and zeolite ZSM-5.

US-A-4,837,396 discloses cracking processes employing a catalyst comprising a large-pore zeolite, which may be zeolite Y, and zeolite beta.

While all of the above approaches were effective at increasing olefin yields in FCC, none provided a complete solution to the problem of making more light olefins, while maintaining gasoline yields and gasoline octane. We knew that cracking refineries of the future would need more olefins.

We found that the combination of a ZSM-5 type zeolite (e.g., ZSM-5, ZSM-11) and zeolite beta with a zeolite Y containing catalyst is unexpectedly effective in increasing gasoline octane while at the same time producing substantial amounts of light olefins.

Zeolite beta, and shape selective zeolites such as ZSM-5 can be said to operate synergistically in catalytic cracking, in that the combination of the two zeolites is more effective than either of the individual components when measured on a constant zeolite basis.

Accordingly, the present invention provides a process for catalytic cracking, in either a moving of fluidized bed (FCC), of a normally liquid hydrocarbon feed containing hydrocarbons boiling above 343°C (650°F) comprising cracking the liquid feed in a cracking reactor at cracking conditions by contact with a source of regenerated equilibrium catalyst comprising catalytically effective amounts of: zeolite beta, a shape selective zeolite having a Constraint Index (CI) of 3 - 12 and faujasite cracking catalyst; and wherein the weight ratio R, defined as (wt % CI 3-12 zeolite) / (wt % CI 3-12 zeolite + wt % zeolite beta), on a pure crystal basis and exclusive of matrix or other catalytic components which may be present, ranges from 0.01 to 0.95.

In another embodiment, the present invention provides a process for the fluidized catalytic cracking (FCC) of a normally liquid hydrocarbon feed containing hydrocarbons boiling above 343°C (650°F) comprising cracking the liquid feed in an FCC cracking reactor at FCC cracking conditions by contact with regenerated equilibrium catalyst comprising, on a matrix free basis 40 to 90 wt % zeolite Y having a silica:alumina ratio above 5:1 and containing 0.2 to 5.0 wt % rare earths; 5 to 50 wt % zeolite beta; and 1/2 to 25 wt % ZSM-5.

In another embodiment, the present invention provides a catalyst composition for fluidized catalytic cracking comprising particles having an average particle size within the range of 50 to 100 μm and comprising zeolite Y, zeolite beta and ZSM-5, and wherein the ratio R of ZSM-5 to (ZSM-5 + zeolite beta), on a matrix free basis, ranges from 0.01 to 0.95, and wherein the zeolite beta and ZSM-5 are essentially free of added hydrogenation/dehydrogenation components.

Figure 1 (Prior Art) shows a conventional FCC unit with a riser reactor.

Figure 1A shows the effect of ZSM-5 and beta, on a % additive basis, on the research octane of FCC gasoline.

Figure 2 shows the effect of ZSM-5 and beta, on a % additive basis, on the motor octane of FCC gasoline.

Figure 3 shows the effect of ZSM-5 and beta, on a % additive basis, on propylene yields from an FCC unit.

Figure 4 shows the effect of ZSM-5 and beta, on a % additive basis, on isobutane yields from an FCC unit. Fiqure 5 shows the effect of ZSM-5 and beta, on a % additive basis, on butene yields from an FCC unit.

Figure 6 shows the effect of ZSM-5 and beta, on a pure zeolite basis, on the research octane of FCC gasoline.

Figure 7 shows the effect of ZSM-5 and beta, on a pure zeolite basis, on the motor octane of FCC gasoline.

Figure 8 shows the effect of ZSM-5 and beta, on a pure zeolite basis, on propylene yields from an FCC unit.

Figure 9 shows the effect of ZSM-5 and beta, on a pure zeolite basis, on isobutane yields from an FCC unit.

Figure 10 shows the effect of ZSM-5 and beta, on a pure zeolite basis, on butene yields from an FCC unit.

Figure 11 shows the effect of ZSM-5 and beta on motor octane at different conversions in the FCC unit.

Figure 1 (Prior Art) is a simplified schematic view of an FCC unit of the prior art, similar to the Xellogg Ultra Orthoflow converter Model F shown as Fig. 17 of Fluid Catalytic Cracking Report, in the January 8, 1990 edition of Oil & Gas Journal.

A heavy feed such as a gas oil, vacuum gas oil is added to riser reactor 6 via feed injection nozzles 2. The cracking reaction is completed in the riser reactor, which takes a 90° turn at the top of the reactor at elbow 10. Spent catalyst and cracked products discharged from the riser reactor pass through riser cyclones 12 which efficiently separate most of the spent catalyst from cracked product. cracked product is discharged into disengager 14, and eventually is removed via upper cyclones 16 and conduit 18 to the fractionator.

Spent catalyst is discharged down from a dipleg of riser cyclones 12 into catalyst stripper 8, where one, or preferably 2 or more, stages of steam stripping occur, with stripping steam admitted via lines 19 and 21. The stripped hydrocarbons, and stripping steam, pass into disengager 4 and are removed with cracked products after passage through upper cyclones 16.

Stripped catalyst is discharged down via spent catalyst standpipe 26 into catalyst regenerator 24. The flow of catalyst is controlled with spent catalyst plug valve 36.

This stripper design is efficient due to its generous size. Most riser reactor FCC's have strippers disposed as annular beds about the riser reactor, and do not provide this much cross sectional area for catalyst flow.

Catalyst is regenerated in regenerator 24 with air, added via air lines and air grid distributor not shown. cat cooler 28 permits heat removal from the regenerator. Regenerated catalyst is withdrawn via regenerated catalyst plug valve assembly 30 and discharged via lateral 32 into the base of the riser reactor 6 to contact and crack fresh feed injected via injectors 2, as previously discussed. Flue gas, and some entrained catalyst, are discharged into a dilute phase region in the upper portion of regenerator 24. Entrained catalyst is separated from flue gas in multiple stages of cyclones 4, and discharged via outlets 8 into plenum 20 for discharge to the flare via line 22.

Having provided an overview of the process and apparatus of the invention, more details will now be provided about the FCC process and the reactor design (which can be conventional) and the catalyst system of the present invention.

## FEED

Any conventional FCC or moving bed cracking unit feed can be used. The feeds for FCC may range from the typical, such as petroleum distillates or residual stocks, either virgin or partially refined, to the atypical, such as coal oils and shale oils. Moving bed cracking units usually can not handle feeds containing much resid. The feed frequently will contain recycled hydrocarbons, such as light and heavy cycle oils which have already been cracked.

Preferred feeds for both FCC and TCC are relatively light, clean feeds. The ideal feeds are those which are completely distillable and have been hydrotreated. However, the benefits of combining the two zeolites will be observed with any feed.

## REACTOR CONDITIONS

Conventional cracking conditions may be used. In FCC processing, riser cracking is preferred. Most riser FCC units operate with catalyst/oil weight ratios of 1:1 to 10:1, and a hydrocarbon residence time of 1 - 10 seconds. Most operate with reactor outlet temperatures of 510 - 566°C (950 - 1050°F). The reactor outlet temperature is preferably above 538°C (1000°F), most preferably from 552 to 593°C (1025 to 1100°F), and most preferably about 580°C (1075 F). Short contact times, 0.1 - 1 seconds, and temperatures of 538° - 649°C (1000 - 1200°F), may also be used.

Quench is beneficial but not essential. Quench will augment production of gasoline boiling range olefins, which the catalyst system of the present invention efficiently converts into lighter olefins.

Conventional all riser cracking FCC's, such as disclosed in U.S. 4,421,636, may be used.

In moving bed cracking units, such as the one shown in US 4,980,051, conventional conditions may also be used. More details about the TCC design and operating conditions are also reported by Avidan and Shinnar in Development of Catalytic Cracking Technology. A Lesson in Chemical Reactor Design, I & EC RESEARCH, 1990, 29. Typical TCC cracking conditions include a cat:oil weight ratio of 1.5 to 15, and preferably 4 to 10, and a reactor temperature of 450 to 550 C, preferably about 500 to 530 C. The catalyst formulation for TCC can be identical to that used in FCC units, but the catalyst will be in the form of 3-5 mm spheres.

## FCC RISER REACTOR OUTLET/CATALYST SEPARATION

It is preferred, but not essential, to separate rapidly spent catalyst from cracked products discharged from the reactor. Use of a cyclone separator, or other inertial separator will help separate coked catalyst from cracked products.

Closed cyclones, such as those available from the M. W. Kellogg company, which rapidly remove cracked products from the reactor vessel are preferred.

CATALYST STRIPPING

Conventional stripping techniques can be used to remove strippable hydrocarbons from spent catalyst, usually contact with 1 to 5 wt % steam.

CATALYST REGENERATION

The process and apparatus of the present invention can use conventional FCC regenerators. Most use a single large vessel, with a dense phase, bubbling fluidized bed of catalyst. High efficiency regenerators, with a fast fluid bed coke combustor, a dilute phase transport riser above it, and a second fluidized bed to collect regenerated catalyst, may be used. More details about several representative bubbling dense bed regenerators are presented below.

Swirl regenerators are disclosed in US 4,490,241, Chou, and US 4,994,424 Leib and Sapre.

A cross-flow regenerator is disclosed in US 4,980,048 Leib and Sapre.

A regenerator associated with a stacked or Orthoflow type FCC unit is disclosed in US 5,032,252 and US 5,043,055 Owen and Schipper.

TCC regeneration conditions include catalyst air contact at temperature from 600 to 700 C, with the catalyst passing as a moving bed through the regenerators, sometimes called kilns.

CATALYST SYSTEM OF THE INVENTION

The catalyst system of the invention must contain catalytically effective amounts of faujasite and both ZSM-5 (or other zeolite having the appropriate constraint index such as SSM-11) and zeolite beta. The weight ratio of the ZSM-5 "type zeolite" (i.e., ZSM-5 or ZSM-11 or combinations of the two) to the combination of the ZSM-5 and zeolite beta:

$$R = (ZSM\text{-}5/(ZSM\text{-}5 + \text{zeolite beta})$$

must be greater than 0.01 and less than 0.95 and preferably in the range of 0.02 to 0.50.

R can be approximately determined from the relative ratios of the XRD peak intensities of the two zeolites in non-intersecting 2 Theta regions. For ZSM-5 this would be for the five indexed peaks in the 22.5 - 25.2R region. For zeolite beta, this would be for the indexed peaks in 20 - 24R region. To attain these peak intensities for an FCC catalyst sample where ZSM-5 and zeolite beta may be in small concentration, e.g., in combination with a Y zeolite, it may be required to use synchrotron radiation as the X-ray source.

The catalyst system contains large amounts of conventional zeolite Y based cracking catalyst. Best results will be achieved if a low hydrogen transfer catalyst is used. An example of a low hydrogen transfer catalyst is USY or USY containing small amounts of rare earth oxides. Such catalysts are available "off the shelf" from many FCC catalyst manufacturers.

For the equilibrium catalyst, or "E-Cat", a mix of faujasite catalyst and ZSM-5 + beta, the following additional guidelines can be given regards optimum amounts of each. Preferably the Y zeolite provides at least 75 % of the total zeolite content of the E-Cat, on a matrix free basis. The total (ZSM-5 + beta) zeolite content should usually be the remainder, i.e., less than 25 wt %.

The zeolite beta component should be present in excess, i.e., it should be a majority of the non-Y zeolite present. Preferably the beta content is at least twice that of the ZSM-5 or other CI 3 - 12 zeolite. More preferably, the weight ratio of zeolite beta:ZSM-5 is above 5:1, and most preferably above 10:1. We have achieved good results with ratios of beta:ZSM-5 of around 20:1 to 30:1, and believe optimum results can be achieved in many refineries with a beta:CI 3 - 12 zeolite weight ratio of 15:1 to 50:1.

Thus almost an order of magnitude more beta than ZSM-5 may be required for optimum results. The reasons for this are not entirely understood, as both zeolite beta and ZSM-5 are relatively high silica materials.

All parts of the catalyst system may be in the same particle, or in separate particles with about the same fluidization characteristics, i.e., similar particle size and density so that essentially the same catalyst system will be at the base of a riser reactor as at the top. conventional additives for CO combustion, metals passivation, etc., may also be present.

Each part of the catalyst system of the invention is reviewed in depth hereafter, starting with the preferred, but optional, zeolite Y based cracking catalyst and additives.

CONVENTIONAL ZEOLITE Y CATALYST

Much, even most, of the circulating catalyst inventory may be commercially available zeolite Y based FCC catalyst. This Y zeolite catalyst usually contains at least 10 wt % large pore zeolite in a porous refractory matrix such as silica-alumina, clay, or the like. The zeolite content may be much higher than this, e.g., 20 wt % or 30 wt % or more.

All zeolite contents discussed herein refer to the zeolite content of the makeup catalyst, rather than the zeolite content of the equilibrium catalyst, or E-Cat. Much crystallinity is lost in the weeks and months that the catalyst spends in the harsh, steam filled environment of modern FCC regenerators, so the E-cat has a lower zeolite content by classical analytic methods than the makeup catalyst. Most refiners refer to the zeolite content of their makeup catalyst, and the MAT (Modified Activity Test) or FAI (Fluidized Activity Index) of their E-Cat and this specification adopts this naming convention.

Conventional zeolites such as hydrogen (HY) and rare earth exchanged (REY) zeolites, or aluminum deficient forms of these zeolites such as dealuminized Y (DEAL Y), ultrastable Y (USY) and ultrahydrophobic Y (UHP Y) may be used. The modified Y zeolites may be stabilized with Rare Earths, e.g., 0.1 to 20 wt % RE203.

LOW HYDROGEN TRANSFER Y ZEOLITE

Preferably the zeolite Y cracking catalyst, if present, has a low hydrogen transfer activity. Thus use of a low rare earth, high silica Y zeolite, such as LREUSY increases production of gasoline boiling range olefins which increases production of lighter olefins.

To maximize gasoline olefin content the rare earth content of the USY catalyst should be 0.2 to 10 wt %, preferably 0.2 to 5.0 wt %, and most preferably 1.0 to 3.0 wt %.

The silica:alumina ratio *of* the ultrastable Y zeolite will usually be 5 to 100, preferably 6 to 20, and most preferably 6 to 15. The unit cell size will typically be less than 2.46 nm (24.60 Angstrom).

One minor distraction of using LREUSY is that there will usually be some reduction in gasoline yield, more than if an equivalent amount of zeolite beta based cracking catalyst were used instead of LREUSY based catalyst.

ADDITIVES

The circulating catalyst inventory typically contains one or more additives, either present as separate additive particles, or mixed in with each particle of the cracking catalyst. Additives can be added to enhance fluidization, promote co combustion, or SOx capture, impart metals resistance, etc. These may be present but are not essential.

The above materials, the zeolite Y based cracking catalyst and various additives, are optional. The two essential catalyst elements will now be reviewed, the ZSM-5 or ZSM-11 zeolite and the zeolite beta zeolite.

CI 3 - 12 COMPONENT

Any crystalline material having a Constraint Index of 3-12 can be used but ZSM-5 is especially preferred. Details of the constraint Index test procedures are provided in J. Catalysis 67, 218-222 (1981), U.S. 4,016,218 and in U.S. 4,711,710 (Chen et al).

Preferred shape selective crystalline materials are exemplified by ZSM-5, ZSM-11, ZSM-12, ZSM-23, ZSM-35, ZSM-48, ZSM-57 and similar materials.

ZSM-5 is described in U.S. 3,702,886, U.S. Reissue 29,948 and in U.S. 4,061,724 (describing a high silica ZSM-5 as "silicalite").

ZSM-11 is described in U.S. 3,709,979.

ZSM-12 is described in U.S. 3,832,449.

ZSM-23 is described in U.S. 4,076,842.

ZSM-35 is described in U.S. 4,016,245.

ZSM-48 is described in U.S. 4,350,835.

Zeolites in which some other framework element is present in partial or total substitution of aluminum can be advantageous. Elements which can be substituted for part of all of the framework aluminum are boron, gallium, zirconium, titanium and trivalent metals which are heavier than aluminum. Specific examples of such catalysts include ZSM-5 containing boron, gallium, zirconium and/or titanium. In lieu of, or in addition to, being incorporated into the zeolite framework, these and other catalytically active elements can be deposited upon the zeolite by any suitable procedure, e.g., impregnation.

Relatively high silica shape selective zeolites may be used, i.e., with a silica/alumina ratio above 20/1, and more preferably with a ratio of 70/1, 100/1, 500/1 or even higher.

Preferably the shape selective zeolite is placed in the hydrogen form by conventional means, such as exchange with ammonia and subsequent calcination.

The CI 3 - 12 component, hereafter frequently referred to by the preferred member of this group, ZSM-5, may be incorporated as a separate, individual catalyst in its own matrix system or it may be combined with the zeolite beta zeolite in the same particle. Alternatively, ZSM-5 may be combined into one particle along with both the Y zeolite and zeolite beta or with either Y or zeolite beta. The ZSM-5 content in the particle may range from 1 wt % to 80 wt %. Below 1.0 wt % ZSM-5 in the particle, the effectiveness of the zeolite is diminished because of dilution. Above 80 wt % the structural integrity of the catalyst particle drops markedly.

ZEOLITE BETA COMPONENT

The zeolite beta component may be incorporated as a separate, individual catalyst in its own matrix system or it may be combined with the ZSM-5 zeolite in the same particle. Alternatively, zeolite beta may be combined into one particle along with both the Y zeolite and ZSM-5 or with either Y or zeolite beta. The zeolite beta content in the particle may range from 1 wt % to 80 wt %. As with ZSM-5, at levels below 1.0 wt % in the particle, the effectiveness of the zeolite is diminished because of dilution. Above 80 wt % the structural integrity of the catalyst particle drops markedly.

Different forms of zeolite beta, which have the same X-ray diffraction pattern, may also be used, e.g., Ga containing zeolite beta wherein the Ga has been isomorphously substituted. See for example EP-A-45314B on Ga Beta.

MATRIX

It may be desirable to incorporate the zeolites (any of them, ranging from the conventional zeolite Y to zeolite beta or ZSM-5) into a conventional matrix. Such matrix materials include synthetic and naturally occurring substances, such as inorganic materials, e.g., clay, silica, and metal oxides such as alumina, silica- alumina, silica-magnesia, etc. The matrix may be in the form of a cogel or sol.

The relative proportions of zeolite component and inorganic oxide gel matrix on an anhydrous basis may vary widely with the zeolite content ranging from 5 to 99, more usually 10 to 65, wt.% of the dry composite. The matrix may have catalytic properties, generally acidic, and may be impregnated with a combustion promoter, such as platinum.

The matrix material may include phosphorus that is derived from a water soluble phosphorus compound including phosphoric acid, ammonium dihydrogen phosphate, diammonium hydrogen phosphate, ammonium phosphate, ammonium hypophosphate, ammonium phosphite, ammonium hypophosphite and ammonium dihydrogen orthophosphite.

The zeolites may be used on separate catalyst particles or the different zeolites may be present in the same particle.

The following examples are provided in support of the invention.

**EXAMPLE 1**

A zeolite beta fluid catalyst was prepared by spray drying an aqueous slurry containing 1600 grams of zeolite beta, 3212 grams of colloidal silica (34% $SiO_2$; ex. Nalco), 144 grams of pseudoboehmite alumina (75% solids; ex. Condea) peptized with 21.6 grams of formic acid (90%) and 756 grams of deionized water, 1988 grams of Thiele RC-32 clay slurry (60.37% solids), 472 grams of phosphoric acid (86.1%), and 3928 grams of deionized water.

The catalyst composition was: 40 wt.% zeolite beta, 27.3 wt.% silica, 2.7 wt.% alumina, and 30.0 wt.% clay. After spray drying, the catalyst was calcined. The calcination was carried out at 538°C (1000°F) for 3 hours in air.

**EXAMPLE 2**

The catalyst of Example 1 was steamed for 10 hours, 788°C (1450°F), 45% steam at a pressure of 105 kPa (0 psig).

**EXAMPLE 3**

A commercial ZSM-5 FCC additive catalyst containing 15 wt % zeolite was steamed for 10 hours, 788°C (1450°F), 100% steam at a pressure of 150 kPa (6 psig).

**EXAMPLE 4**

The zeolite Y catalyst employed in the present study was an RE-USY FCC catalyst removed from a commercial FCC unit following oxidative regeneration. The fresh or makeup catalyst to this unit contained 35 wt % zeolite Y.

**EXAMPLE 5**

The catalyst of Example 3 was blended with Example 4 to the following additive level:

2 wt.% Example 3
98 wt.% Example 4

The value of R, the ratio of ZSM-5 to (ZSM-5 + zeolite beta) for this example was unity, as no zeolite beta was present.

**EXAMPLE 6**

The catalysts of Example 2 and Example 3 were blended with Example 4 to the following additive level:

| WT % ADDITIVE | g Zeolite/100 g Mixture |
|---|---|
| 23 wt.% Example 2 | 9.2 g beta |
| 2 wt.% Example 3 | 0.3 g ZSM-5 |
| 75 wt.% Example 4 | 26.3 g Y |

The value of R, the ratio of ZSM-5 to (ZSM-5 + zeolite beta), was 0.032.

**EXAMPLE 7**

The catalyst of Example 2 was blended with Example 4 to the following additive level:

25 wt.% Example 2
75 wt.% Example 4

The value of R, the ratio of ZSM-5 to (ZSM-5 + zeolite beta), was zero because no ZSM-5 additive was present.

CATALYTIC EVALUATION

The catalysts of Examples 4 - 7 were evaluated in a fixed-fluidized bed (FFB) unit at 516°C (960°F), 1.0 minute catalyst contact time using a Nigerian Light vacuum Gas Oil (NLVGO) with the properties shown in Table 1.

Table 1.

| Properties of Nigerian Light Vacuum Gas Oil | |
|---|---|
| Pour Point, °C (°F) | 38 (100) |
| K.V. @ 100°C | 10.05 |
| Aniline Point, °C (°F) | 86 (187.4) |
| Gravity, API | 21.6 |
| Carbon, wt % | 87.56 |
| Hydrogen, wt % | 12.0 |
| Sulfur, wt % | 0.30 |
| Nitrogen, wt % | 0.14 |
| Total | 100.0 |

A range of conversions was scanned by varying the catalyst/oil ratios. The FFB results (after interpolation at 70 vol.% conversion) are summarized in Table 2.

At a given conversion, zeolite beta combined with RE-USY and ZSM-5 (Example 6) produces a higher octane gasoline than the conventional RE-USY (Example 4), the combination of ZSM-5/RE- USY (Example 5) or the combination of zeolite beta/RE-USY (Example 7) as measured by Research Octane Number (RON). Figure 11 also shows that the combination of RE-USY with ZSM-5 and beta is superior to either ZSM-5 or beta combined with RE-USY as measured by Motor Octane Number (MON).

Also, Figures 1 - 10 show that the RE-USY + ZSM-5 + zeolite beta combination (Example 6) produces more light olefins (C3= and C4=) and isobutane yields vs. the conventional RE-USY or combination of ZSM-5/RE-USY.

Table 2

| Example | 4 | 5 | 7 | 6 |
|---|---|---|---|---|
| Additive Concentration | | | | |
| ZSM-5, wt % | - | 2 | - | 2 |
| Beta, wt % | - | - | 25 | 23 |
| RE-USY, wt % | 100 | 98 | 75 | 75 |
| R ratio | 0 | 1.0 | -0- | 0.03 |
| | Yield Shifts Relative To RE-USY | | | |
| Conversion, vol % | 70.0 | 0.0 | 0.0 | 0.0 |
| Conversion, wt % | 65.9 | (0.3) | (0.2) | (0.3) |
| C5+ Gasoline, wt % | 49.0 | (3.3) | (4.4) | (5.3) |
| C5+ Gasoline, vol % | 54.5 | (3.3) | (4.2) | (5.1) |
| Light Gas, wt % | 1.5 | 0.6 | 0.4 | (0.2) |
| Total C3, vol % | 7.5 | 2.5 | 2.0 | 4.3 |
| Total C4, vol % | 10.7 | 0.2 | 3.4 | 3.4 |
| Coke, wt % | 3.6 | 0.8 | 0.3 | 0.2 |
| LFO, wt % | 25.5 | 0.1 | (2.2) | (1.4) |
| HFO, wt % | 8.6 | 0.2 | 2.4 | 1.8 |
| G+D, wt % | 74.6 | (3.3) | (6.8) | (6.8) |
| Alkylate, vol % | 16.0 | 4.1 | 8.1 | 10.6 |
| Gasoline+ Alkylate vol % | 70.6 | 0.7 | 3.8 | 5.4 |
| Outside iC4 for Alky LV % | 6.3 | 2.3 | 4.6 | 5.7 |
| n-C5, vol % | 0.8 | (0.1) | (0.4) | (0.4) |
| i-C5, vol % | 3.4 | 0.6 | 0.8 | 1.1 |
| C5=, vol % | 3.2 | 0.2 | 2.5 | 1.9 |
| n-C4, vol % | 1.7 | (1.2) | (0.2) | (0.7) |
| n-C4, wt % | 1.1 | (0.8) | (0,1) | (0.4) |
| i-C4, vol % | 4.7 | 0.5 | 0.9 | 1.5 |
| i-C4, wt % | 3.1 | 0.3 | 0.5 | 1.0 |
| C4=, vol % | 4.3 | 0.9 | 2.7 | 2.6 |
| C4=, wt % | 3.1 | 0.6 | 1.9 | 1.8 |
| C3, vol % | 2.2 | 0.9 | (0.1) | 0.5 |
| C3, wt % | 1.3 | 0.5 | (0,1) | 0.3 |
| C3=, vol % | 5.3 | 1.6 | 2.1 | 3.8 |
| C3=, wt % | 3.2 | 1.0 | 1.3 | 2.3 |
| C2, wt % | 0.2 | 0.1 | 0.6 | 0.1 |
| C2=, wt % | 0.6 | 0.1 | (0.1) | (0.2) |
| C1, wt % | 0.6 | 0.1 | (0.1) | (0.1) |
| H2, wt % | 0.11 | 0.0 | 0.0 | 0.0 |
| H2S, wt % | 0.04 | 0.1 | 0.0 | 0.0 |
| Crackability | 2.3 | 0.0 | 0.0 | 0.0 |
| Hydrogen Factor | 86 | (15.0) | (26.0) | (21.0) |
| RON, Raw Gasoline | 90.8 | 1.9 | 1.7 | 2.7 |
| RON, C5+ Gasoline | 90.0 | 1.4 | 2.0 | 2.8 |
| RON, C5+ Gaso. + Alky | 90.9 | 1.2 | 1.7 | 2.1 |

These examples show the synergism between ZSM-5 and zeolite beta in accomplishing the objectives of higher olefin makes and higher octanes.

The combination of the two zeolites can be characterized by a weight ratio,

$$R = (ZSM\text{-}5)/(ZSM\text{-}5 + \text{zeolite beta})$$

wherein the synergistic effects are noted when $0.01 < R < 0.95$ and preferably when $0.02 < R < 0.50$.

R can be approximately determined from the relative ratios of the XRD peak intensities of the two zeolites in non-intersecting 2 Theta regions. For ZSM-5 this would be for the five indexed peaks in the 22.5 - 25.2R region. For zeolite beta, this would be for the indexed peaks in the 20 - 24R region. To obtain these peak intensities for an FCC catalyst sample where ZSM-5 and zeolite beta are in small concentration in combination with a Y zeolite, it may be necessary to use synchrotron radiation as a source for the X-rays.

## Claims

1. A process for catalytic cracking, in the absence of added hydrogen, of a normally liquid hydrocarbon feed containing hydrocarbons boiling above 343°C to proudcts including C3/C4 olefins, and a C5+ gasoline comprising cracking said liquid feed in a cracking reactor at cracking conditions by contact with a source of regenerated equilibrium catalyst comprising catalytically effective amounts of:

   a) zeolite beta;
   b) a shape selective zeolite having a Constraint Index (CI) of 3 - 12; and
   c) faujasite cracking catalyst

   and wherein the weight ratio R, defined as (wt % CI 3-12 zeolite) / (wt % CI 3-12 zeolite + wt % zeolite beta), on a pure crystal basis and exclusive of matrix or other catalytic components which may be present, ranges from 0.01 to 0.95.

2. The process of claim 1 wherein the catalyst comprises, on a pure crystal basis and exclusive of any amorphous matrix or faujasite which may be present,

   a) from 1 to 99 wt % zeolite beta
   b) from 99 to 1 wt % CI 3 - 12 zeolite.

3. The process of claim 1 wherein the catalyst system comprises, on a pure crystal basis and exclusive of any amorphous matrix or faujasite which may be present,

   a) from 25 to 95 wt % zeolite beta
   b) from 75 to 25 wt % CI 3 - 12 zeolite.

4. The process of claim 1 wherein the catalyst system comprises, on a pure crystal basis and exclusive of any amorphous matrix or faujasite which may be present,

   a) from 50 to 95 wt % zeolite beta
   b) from 50 to 5 wt % CI 3 - 12 zeolite.

5. The process of claim 1 wherein the CI 3 - 12 zeolite is ZSM-5 or ZSM-11.

6. The process of any preceding claim wherein the equilibrium catalyst is a physical mixture of:

   a) 30 to 5 wt % zeolite beta additive of 10 - 70 wt % zeolite beta in a phosphorus stabilized matrix;
   b) 1 to 10 wt % ZSM-5 additive of 10 - 70 wt % ZSM-5 in a phosphorus stabilized matrix; and
   c) 65 - 90 wt % conventional faujasite cracking catalyst; and wherein the amounts of zeolite beta additive and ZSM-5 additive increase yields of C3/C4 olefins, reduce the yield of C5+ olefins and increase the octane number of the C5 + gasoline relative to a catalyst mixture with the same wt % of said conventional faujasite cracking catalyst diluted with either ZSM-5 additive or zeolite beta additive, but not both additives, and operating at the same conversion.

7. The process of claim 1 wherein the faujasite cracking catalyst comprises ultrastable Y zeolite cracking catalyst.

8. The process of any preceding claim wherein the cracking process is fluidized catalytic cracking or moving bed catalytic cracking.

9. A process for the fluidized catalytic cracking (FCC) of a normally liquid hydrocarbon feed containing hydrocarbons boiling above 343°C to products including C3/C4 olefins, and a C5+ gasoline comprising cracking said liquid feed in an FCC cracking reactor at FCC cracking conditions by contact with a source of regenerated equilibrium catalyst comprising, on a matrix free basis:

a) 50 to 90 wt % zeolite Y having a silica:alumina ratio above 5:1 and containing 0.2 to 5.0 wt % rare earths;
b) 5 to 50 wt % zeolite beta,
c) 1/2 to 25 wt % ZSM-5;

and wherein the zeolite Y content is at least twice as great as the total amount of zeolite beta and ZSM-5, and the zeolite beta content is at least twice as much as the ZSM-5 content.

10. The process of claim 9 wherein the Y zeolite has a silica:alumina ratio greater than 6:1 and a unit cell size less than 24.60 Angstrom, and the Y zeolite contains, on a matrix free basis, less than 3.0 wt % rare earths.

11. The process of claim 9 wherein the regenerated equilibrium catalyst comprises, on a matrix free basis:

a) at least 75 wt % zeolite Y ;
b) less than 25 wt % (zeolite beta + ZSM-5); and at least ten times more zeolite beta than ZSM-5.

12. The process of claim 9 wherein the equilibrium catalyst comprises a physical mixture of separate particles of zeolite Y, zeolite beta and ZSM-5.

13. The process of claim 11 wherein the equilibrium catalyst comprises particles each of which contains zeolite Y, zeolite beta and ZSM-5.

14. A catalyst composition for fluidized catalytic cracking comprising particles having an average particle size within the range of 50 to 100 microns and comprising zeolite Y, zeolite beta and ZSM-5, and wherein the ratio R of ZSM-5 to (ZSM-5 + zeolite beta), on a matrix free basis, ranges from 0.01 to 0.95, and wherein the zeolites are essentially free of added hydrogenation/dehydrogenation components.

15. The composition of claim 14 wherein the catalyst composition is a physical mixture of separate particles of zeolite Y, zeolite beta and ZSM-5.

16. The composition of claim 14 wherein the catalyst particles each contains zeolite Y, zeolite beta and ZSM-5.

17. The composition of claim 14 wherein the zeolite Y content is at least twice the combined contents of zeolites beta and ZSM-5, and the zeolite beta content is at least 10 times the ZSM-5 content.

**Patentansprüche**

1. Verfahren zum katalytischen Cracken ohne zugesetzten Wasserstoff einer normalerweise flüssigen Kohlenwasserstoffbeschickung, die oberhalb 343°C siedende Kohlenwasserstoffe enthält, in Produkte, einschließlich $C_3/C_4$-Olefine und ein $C_{5+}$-Benzin, das das Cracken der flüssigen Beschickung in einem Crackreaktor bei Crackbedingungen durch den Kontakt mit einer Quelle eines regenerierten Gleichgewichtskatalysator umfaßt, der katalytisch wirksame Mengen von :

a) Zeolith Beta,
b) einem formselektiven Zeolith mit einem Zwangsindex (CI) von 3 bis 12, und
c) einem Faujasit-Crackkatalysator umfaßt,

wobei das Gewichtsverhältnis R, als (Zeolith mit einem CI = 3 bis 12, Gew.-%)/(Zeolith mit einem CI = 3 bis 12, Gew.-% + Zeolith Beta, Gew.-%) definiert, auf der Basis des reinen Kristalls und ohne die Matrix oder andere katalytische Komponenten, die vorhanden sein können, im Bereich von 0,01 bis 0,95 liegt.

**2.** Verfahren nach Anspruch 1, wobei der Katalysator auf der Basis des reinen Kristalls und ohne irgendeine amorphe Matrix oder Faujasit, die vorhanden sein können,

a) 1 bis 99 Gew.-% Zeolith Beta,
b) 99 bis 1 Gew.-% Zeolith mit CI = 3 bis 12 umfaßt.

**3.** Verfahren nach Anspruch 1, wobei das Katalysatorsystem auf der Basis des reinen Kristalls und ohne irgendeine amorphe Matrix oder Faujasit, die vorhanden sein können,

a) 25 bis 95 Gew.-% Zeolith Beta,
b) 75 bis 25 Gew.-% Zeolith mit CI = 3 bis 12 umfaßt.

**4.** Verfahren nach Anspruch 1, wobei das Katalysatorsystem auf der Basis des reinen Kristalls und ohne irgendeine amorphe Matrix oder Faujasit, die vorhanden sein können,

a) 50 bis 95 Gew.-% Zeolith Beta,
b) 50 bis 5 Gew.-% Zeolith mit CI = 3 bis 12 umfaßt.

**5.** Verfahren nach Anspruch 1, wobei der Zeolith mit CI = 3 bis 12 ZSM-5 oder ZSM-11 ist.

**6.** Verfahren nach einem der vorstehenden Ansprüche, wobei der Gleichgewichtskatalysator eine physikalische Mischung ist von:

a) 30 bis 5 Gew.-% Zusatz aus Zeolith Beta in Form von 10 bis 70 Gew.-% Zeolith Beta in einer mit Phosphor stabilisierten Matrix,
b) 1 bis 10 Gew.-% Zusatz aus ZSM-5 in Form von 10 bis 70 Gew.-% ZSM-5 in einer mit Phosphor stabilisierten Matrix, und
c) 65 bis 90 Gew.-% herkömmlicher Faujasit-Crackkatalysator,

wobei die Mengen des Zusatzes Zeolith Beta und des Zusatzes ZSM-5 im Verhältnis zu einer Katalysatormischung mit den gleichen Gew.-% des herkömmlichen Faujasit-Crackkatalysators, entweder mit dem Zusatz ZSM-5 oder dem Zusatz Zeolith Beta, jedoch nicht mit beiden Zusätzen verdünnt und bei der gleichen Umwandlung arbeitend, die Ausbeuten von $C_3/C_4$-Olefinen erhöhen, die Ausbeute an $C_{5+}$-Olefinen verringern und die Octanzahl des $C_{5+}$-Benzins erhöhen.

**7.** Verfahren nach Anspruch 1, wobei der Faujasit-Crackkatalysator einen Crackkatalysator aus ultrastabilem Zeolith Y umfaßt.

**8.** Verfahren nach einem der vorstehenden Ansprüche, wobei das Crackverfahren das katalytische Wirbelschichtcracken oder das katalytische Bewegtbett-Cracken ist.

**9.** Verfahren zum katalytischen Wirbelschichtcracken (FCC) einer normalerweise flüssigen Kohlenwasserstoffbeschickung, die oberhalb 343°C siedende Kohlenwasserstoffe enthält, in Produkte, die $C_3/C_4$-Olefine einschließen, und ein $C_{5+}$-Benzin, das das Cracken der flüssigen Beschickung in einem FCC-Crackreaktor bei FCC-Crackbedingungen durch den Kontakt mit einer Quelle eines regenerierten Gleichgewichtskatalysators umfaßt, der auf matrixfreier Basis umfaßt:

a) 50 bis 90 Gew.-% Zeolith Y mit einem Siliciumdioxid/Aluminiumoxid-Verhältnis von mehr als 5:1, der 0,2 bis 5,0 Gew.-% Seltene Erden enthält,
b) 5 bis 50 Gew.-% Zeolith Beta,
c) 1/2 bis 25 Gew.-% ZSM-5,

wobei der Gehalt an Zeolith Y mindestens doppelt so hoch wie die Gesamtmenge von Zeolith Beta und ZSM-5 ist und der Gehalt an Zeolith Beta mindestens doppelt so hoch wie der Gehalt an ZSM-5 ist.

10. Verfahren nach Anspruch 9, wobei der Zeolith Y ein Siliciumdioxid/Aluminiumoxid-Verhältnis von mehr als 6:1 und eine Größe der Elementarzelle von weniger als 24,60 Angström hat, und der Zeolith Y auf matrixfreier Basis weniger als 3,0 Gew.-% Seltene Erden enthält.

11. Verfahren nach Anspruch 9, wobei der regenerierte Gleichgewichtskatalysator auf matrixfreier Basis umfaßt:

a) mindestens 75 Gew.-% Zeolith Y,
b) weniger als 25 Gew.-% (Zeolith Beta + ZSM-5) und mindestens zehnmal mehr Zeolith Beta als ZSM-5.

12. Verfahren nach Anspruch 9, wobei der Gleichgewichtskatalysator eine physikalische Mischung getrennter Partikel von Zeolith Y, Zeolith Beta und ZSM-5 umfaßt.

13. Verfahren nach Anspruch 11, wobei der Gleichgewichtskatalysator Partikel umfaßt, von denen jedes Zeolith Y, Zeolith Beta und ZSM-5 enthält.

14. Katalysatorzusammensetzung für das katalytische Wirbelschichtcracken, die Partikel mit einer mittleren Partikelgröße im Bereich von 50 bis 100 Mikron umfaßt und Zeolith Y, Zeolith Beta und ZSM-5 umfaßt, wobei das Verhältnis R von ZSM-5 zu (ZSM-5 + Zeolith Beta), auf matrixfreier Basis, im Bereich von 0,01 bis 0,95 liegt, wobei die Zeolithe im wesentlichen ohne zugesetzte Hydrierungs/Dehydrierungs-Komponenten sind.

15. Zusammensetzung nach Anspruch 14, wobei die Katalysatorzusammensetzung eine physikalische Mischung von getrennten Partikeln von Zeolith Y, Zeolith Beta und ZSM-5 ist.

16. Zusammensetzung nach Anspruch 14, wobei die Katalysatorpartikel jeweils Zeolith Y, Zeolith Beta und ZSM-5 enthalten.

17. Zusammensetzung nach Anspruch 14, wobei der Gehalt an Zeolith Y mindestens das Doppelte des Gehalts von Zeolith Beta plus Zeolith ZSM-5 beträgt, und der Gehalt an Zeolith Beta mindestens das Zehnfache des Gehalts an ZSM-5 beträgt.

**Revendications**

1. Un procédé de craquage catalylitique, en absence d'addition d'hydrogène, d'une charge hydrocarbonée, normalement liquide, contenant des hydrocarbures bouillant au-dessus de 343°C, en produits comprenant des oléfines en C3/C4 et une essence en C5+, comprenant le craquage de ladite charge liquide dans un réacteur de craquage dans des conditions de craquage par contact avec une source de catalyseur régénéré à l'équilibre comprenant des quantités catalytiquement efficaces :

a) de zéolite béta :
b) d'une zéolite sélective de forme ayant un indice de contrainte (CI) de 3 à 12 ; et
c) de faujasite comme catalyseur de craquage et

dans lequel le rapport pondéral R, défini par (pourcentage en poids de zéolite de CI 3-12/(pourcentage en poids de zéolite de CI 3-12 + pourcentage en poids de zéolite béta) exprimé en cristaux purs et sans tenir compte de la matrice ni d'autres constituants catalytiques éventuellement présents, compris entre 0.01 et 0,95.

2. Le procédé selon la revendication 1, dans lequel le catalyseur comprend, exprimé en cristaux purs et sans tenir compte de la matrice amorphe ni de la faujasite éventuellement présentes,

a) de 1 à 99% de zéolite bêta
b) de 99 à 1% en poids de zéolite de CI 3-12.

3. Le procédé selon la revendication 1, dans lequel le système catalytique comprend, exprimé en cristaux purs et sans tenir compte de toute matrice amorphe ni de la faujasite éventuellement présentes.

a) de 25 à 95% de zéolite béta
b) de 75 à 25% en poids de zéolite de CI 3-12.

4. Le procédé selon la revendication 1. dans lequel le système catalytique comprend, exprimé en cristaux purs. et sans tenir compte de toute matrice amorphe ni de la faujasite éventuellement présente,

a) de 50 a 95% de zéolite béta
b) de 50 à 5% en poids de zéolite de CI 3-12.

5. Le procédé selon la revendication 1, dans lequel la zéolite de CI 3-12 est la ZSM-5 ou la ZSM-11.

6. Le procédé selon une quelconque des revendications précédentes, dans lequel le catalyseur à l'équilibre est un mélange physique de :

a) 30 à 5% en poids d'un mélange de zéolite béta comprenant 10 à 70% en poids de zéolite béta dans une matrice stabilisée au phospore.
b) 1 à 10% en poids d'un mélange de ZSM-5, comprenant de 10 à 70% de ZSM-5 dans une matrice stabilisée au phosphore ; et
c) 65 à 90% en poids de faujasite comme catalyseur de craquage classique ; et dans lequel les quantités de mélange de zéolite béta et de mélange de ZSM-5 augmente le rendement en oléfines en C3/C4, abaisse le rendement en oléfines en C5+ et augmente l'indice d'octane de l'essence en C5+ par rapport à un mélange de catalyseurs ayant le même pourcentage de ladite faujasite comme catalyseur de craquage classique dilué soit par le mélange de ZSM-5, soit par le mélange de zéolite béta, mais ne contenant pas les deux mélanges, et en opérant à la même conversion.

7. Le procédé selon la revendication 1 dans lequel la faujasite comme catalyseyr de craquage comprend une zéolite Y ultra stable comme catalyseur de craquage.

8. Le procédé selon l'une quelconque des revendications précédentes, dans lequel le procédé de craquage est un craquage catalytique fluidisé ou un craquage catalytique en lit mobile.

9. Un procédé de craquage catalytique fluidisé (FCC) d'une charge hydrocarbonée normalement liquide contenant des hydrocarbures bouillant au-dessus de 343°C pour obtenir des oléfines en C3/C4 et une essence en C5+ comprenant le craquage de ladite charge liquide dans un réacteur de craquage FCC dans les conditions de craquage FCC par contact avec une source de catalyseur à l'équilibre régénéré comprenant, exprimé sans tenir compte de la matrice :

a) 50 à 90% de zéolite Y ayant un rapport silice/alumine supérieur à 5/1 et contenant 0.2 à 5,0% en poids de terres rares :
b) 5 à 50% de zéolite béta :
c) ½ à 25% en poids de ZSM-5 ;

et dans lequel la teneur en zéolite Y est au moins double du total des quantités de zéolite béta et de ZSM-5 et la teneur en zéolite béta est au moins double de la teneur en ZSM-5.

10. Le procédé selon la revendication 9, dans lequel la zéolite Y présente un rapport silice/alumine supérieur à 6/1 et une taille de maille unitaire inférieure à 24,60 Angstroems et la zéolite Y contient, exprimé sans tenir compte de la matrice, moins de 3,0% en poids de terres rares.

11. Le procédé selon la revendication 9, dans lequel le catalyseur régénéré à l'équilibre comprend, exprimé sans tenir compte de la matrice,

a) au moins 75% en poids de zéolite Y ;
b) moins de 25% en poids de (zéolite béta + ZSM-5) et au moins 10 fois plus de zéolite béta que de ZSM-5.

12. Le procédé selon la revendication 9, dans lequel le catalyseur à l'équilibre comprend un mélange physique de particules distinctes de zéolite Y, zéolite béta et de ZSM-5.

13. Le procédé selon la revendication 11, dans lequel le catalyseur à l'équilibre comprend des particules dont chacune contient de la zéolite Y, de la zéolite béta et de la ZSM-5.

14. Une composition de catalyseur pour le craquage catalytique fluidisé comprend des particules ayant une dimension particulaire moyenne dans la fourchette de 50 à 100 microns et comprenant de la zéolite Y, de la zéolite béta et de la ZSM-5, et où le rapport R de ZSM-5 à (ZSM-5 + zéolite béta) exprimée sans tenir compte de la matrice, est dans la fourchette de 0,01 à 0,95 et dans laquelle les zéolites sont sensiblement exemptes de composant d'hydrogénation/déshydrogénation ajoutés.

15. La composition selon la revendication 14, dans laquelle la composition de catalyseur est un mélange physique de particules distinctes de zéolite Y, zéolite béta et ZSM-5.

16. La composition selon la revendication 14, dans laquelle les particules de catalyseur contiennent chacune de la zéolite Y, de la zéolite béta et de la ZSM-5.

17. La composition selon la revendication 14, dans laquelle la teneur en zéolite Y est d'au moins double des teneurs combinées de zéolite béta et de ZSM-5 et la teneur en zéolite béta est d'au moins 10 fois la teneur en ZSM-5.

FIG. 1
(PRIOR ART)

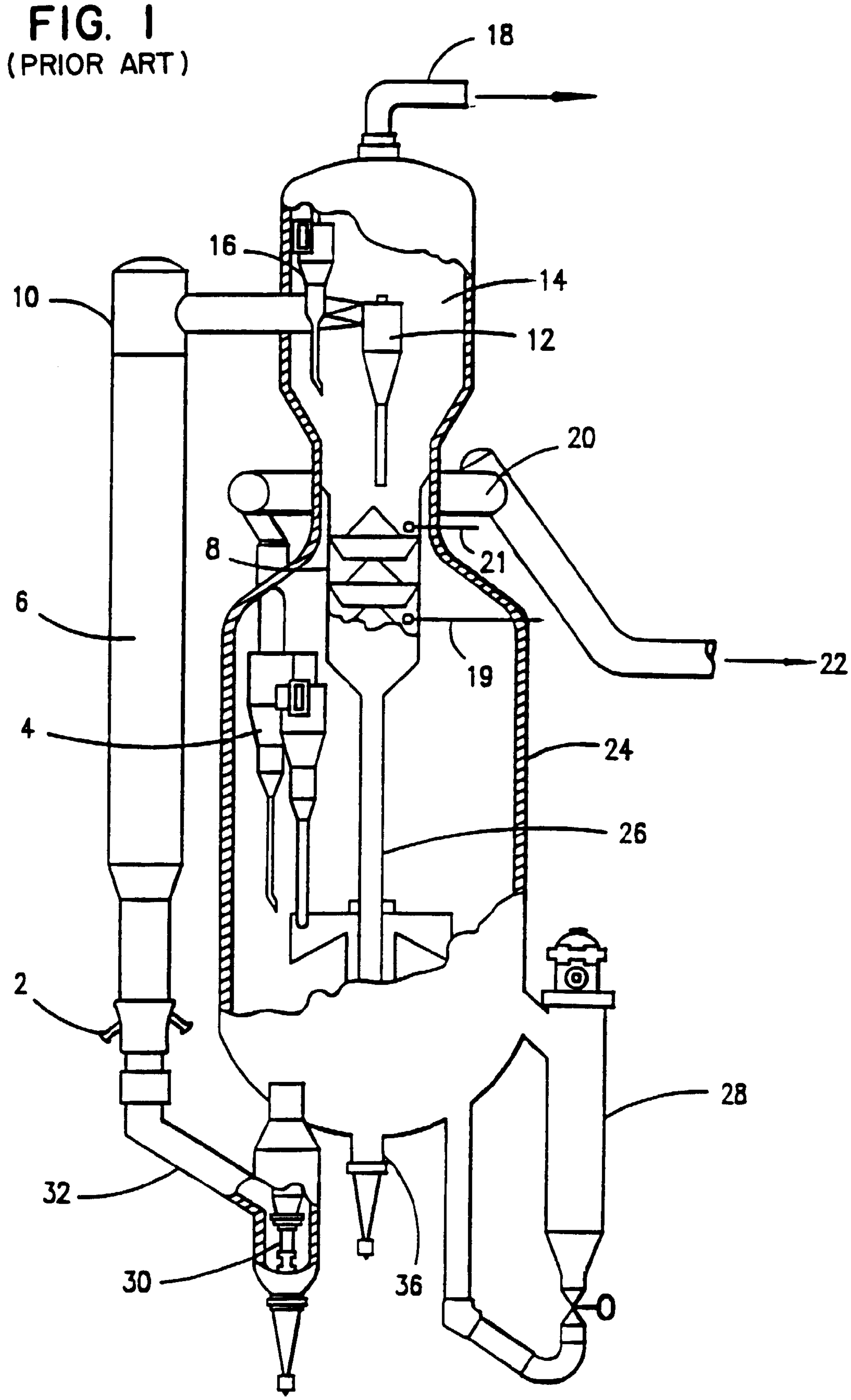

FIG. IA

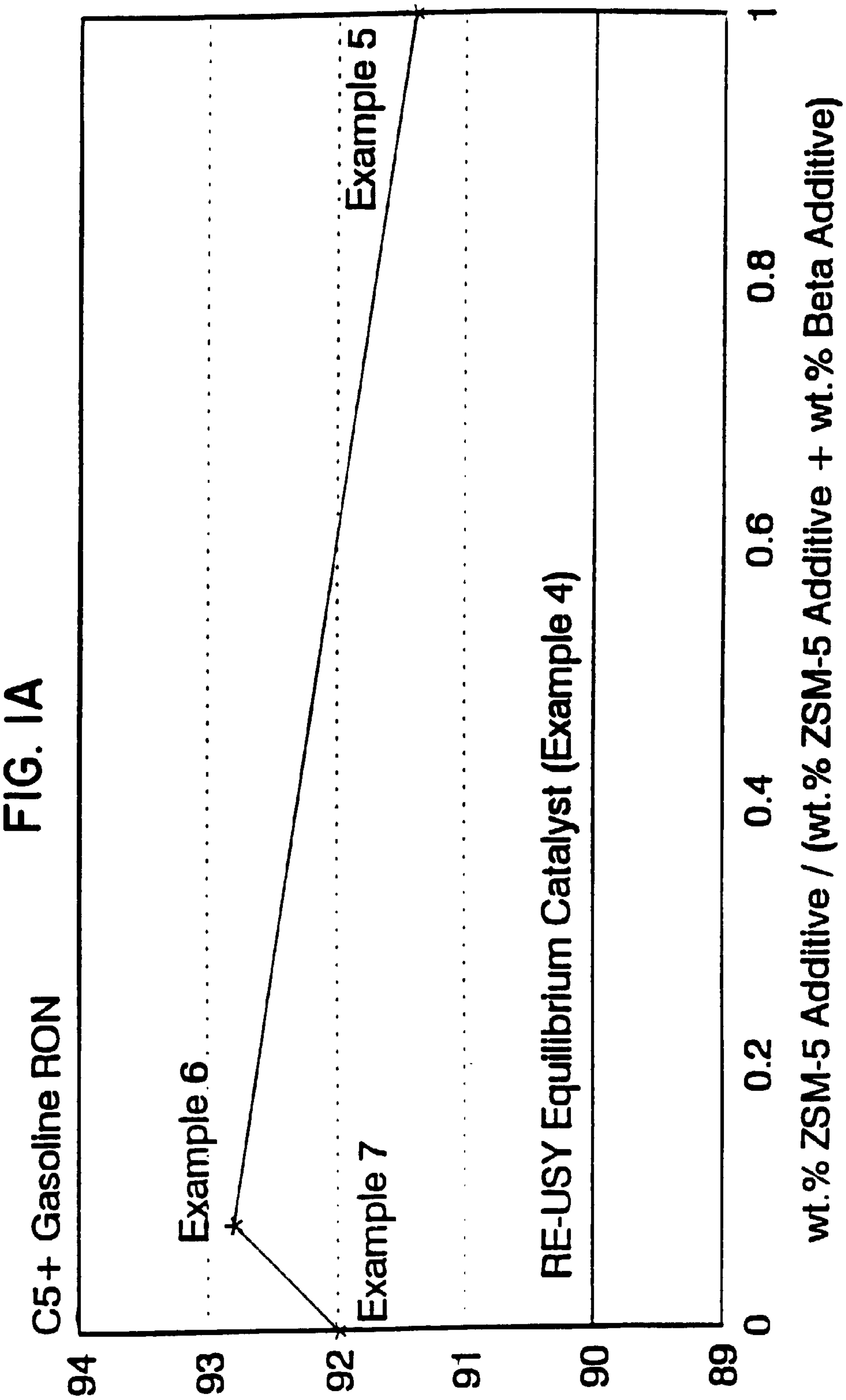
C5+ Gasoline RON
94
93
92
91
90
89
Example 6
Example 7
Example 5
RE-USY Equilibrium Catalyst (Example 4)
0
0.2
0.4
0.6
0.8
1
wt.% ZSM-5 Additive / (wt.% ZSM-5 Additive + wt.% Beta Additive)

FIG. 2

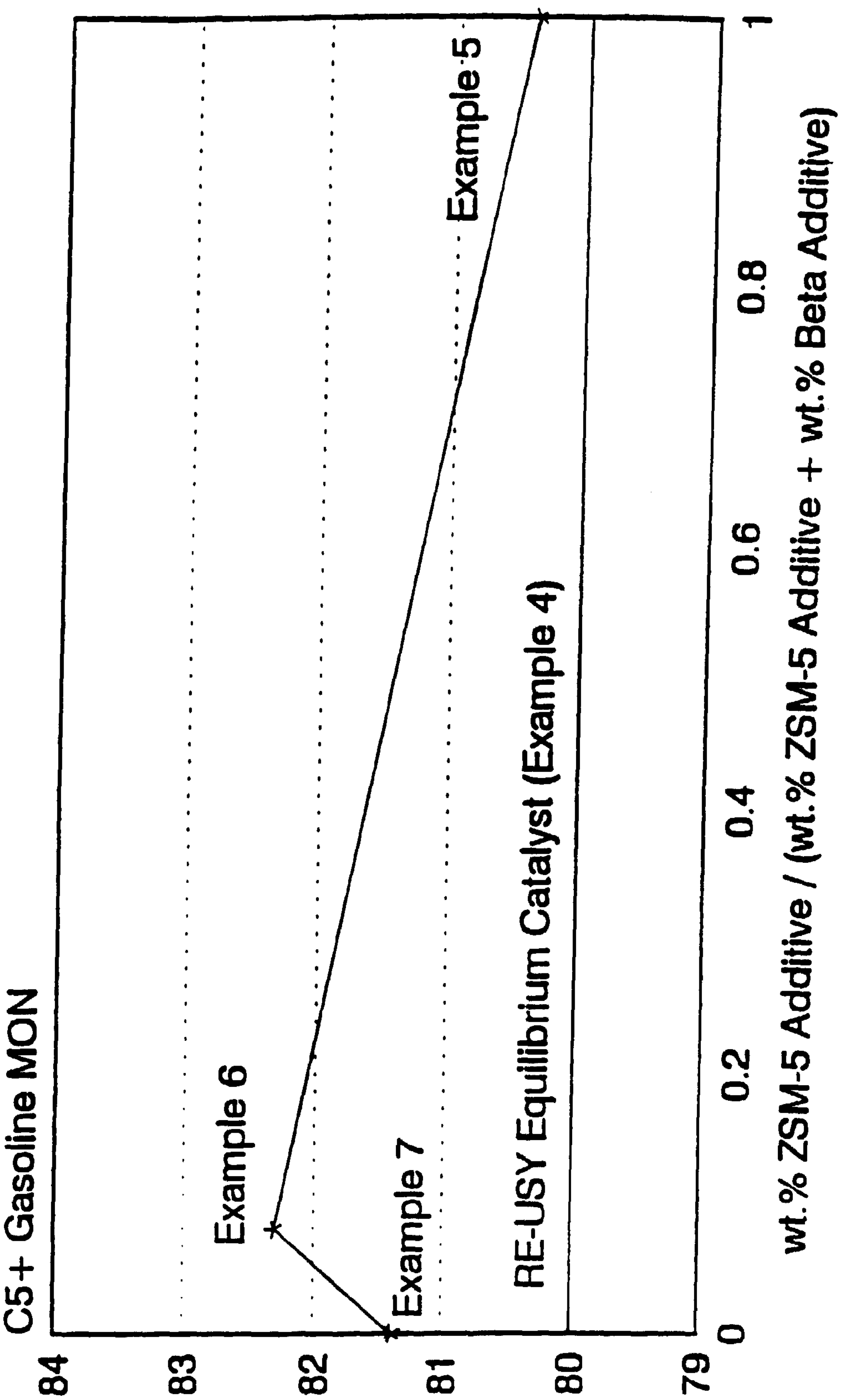
C5+ Gasoline MON
84
83
82
81
80
79
Example 6
Example 7
Example 5
RE-USY Equilibrium Catalyst (Example 4)
0
0.2
0.4
0.6
0.8
1
wt.% ZSM-5 Additive / (wt.% ZSM-5 Additive + wt.% Beta Additive)

FIG. 3

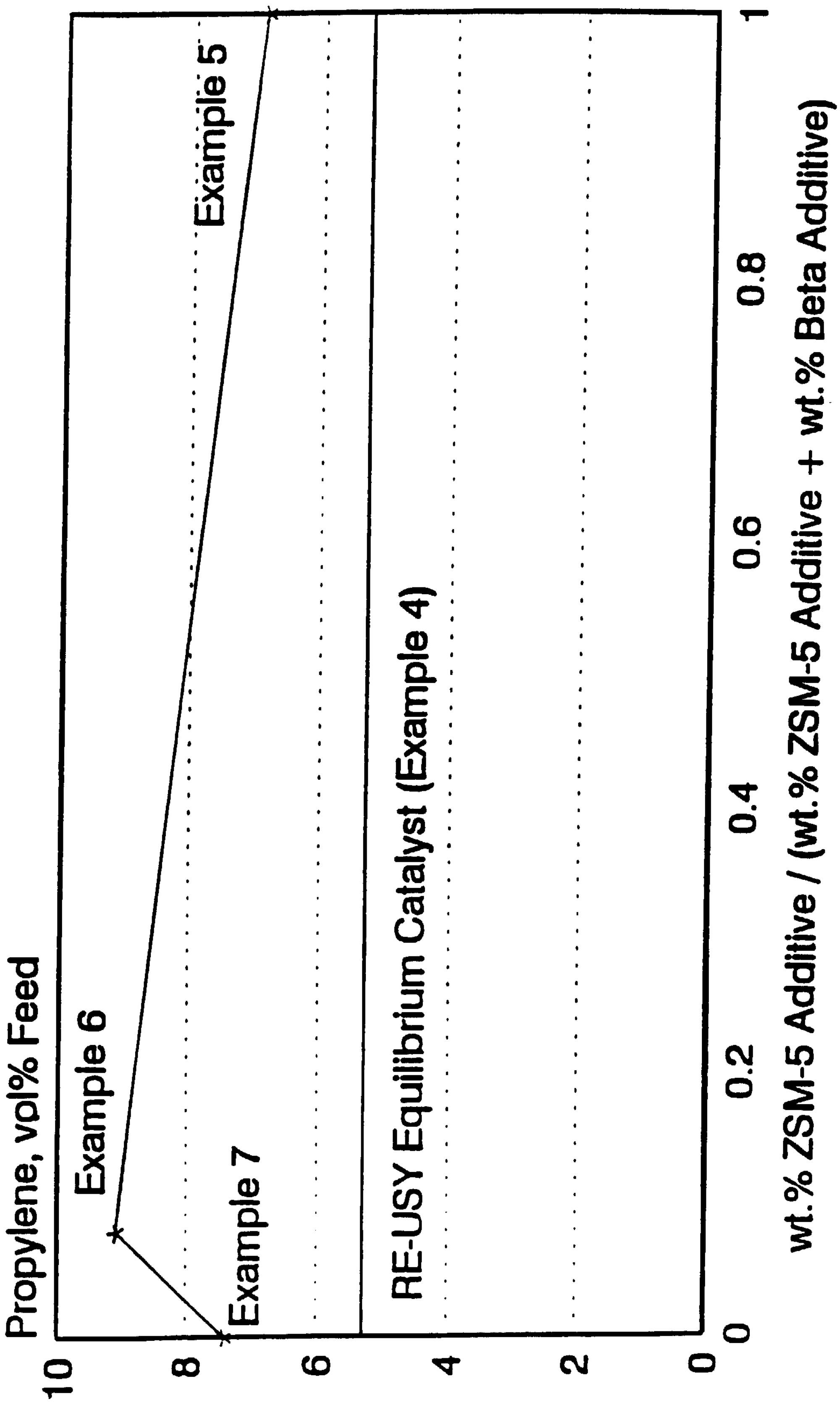
Propylene, vol% Feed
Example 6
Example 7
Example 5
RE-USY Equilibrium Catalyst (Example 4)
10
8
6
4
2
0
0
0.2
0.4
0.6
0.8
1
wt.% ZSM-5 Additive / (wt.% ZSM-5 Additive + wt.% Beta Additive)

FIG. 4

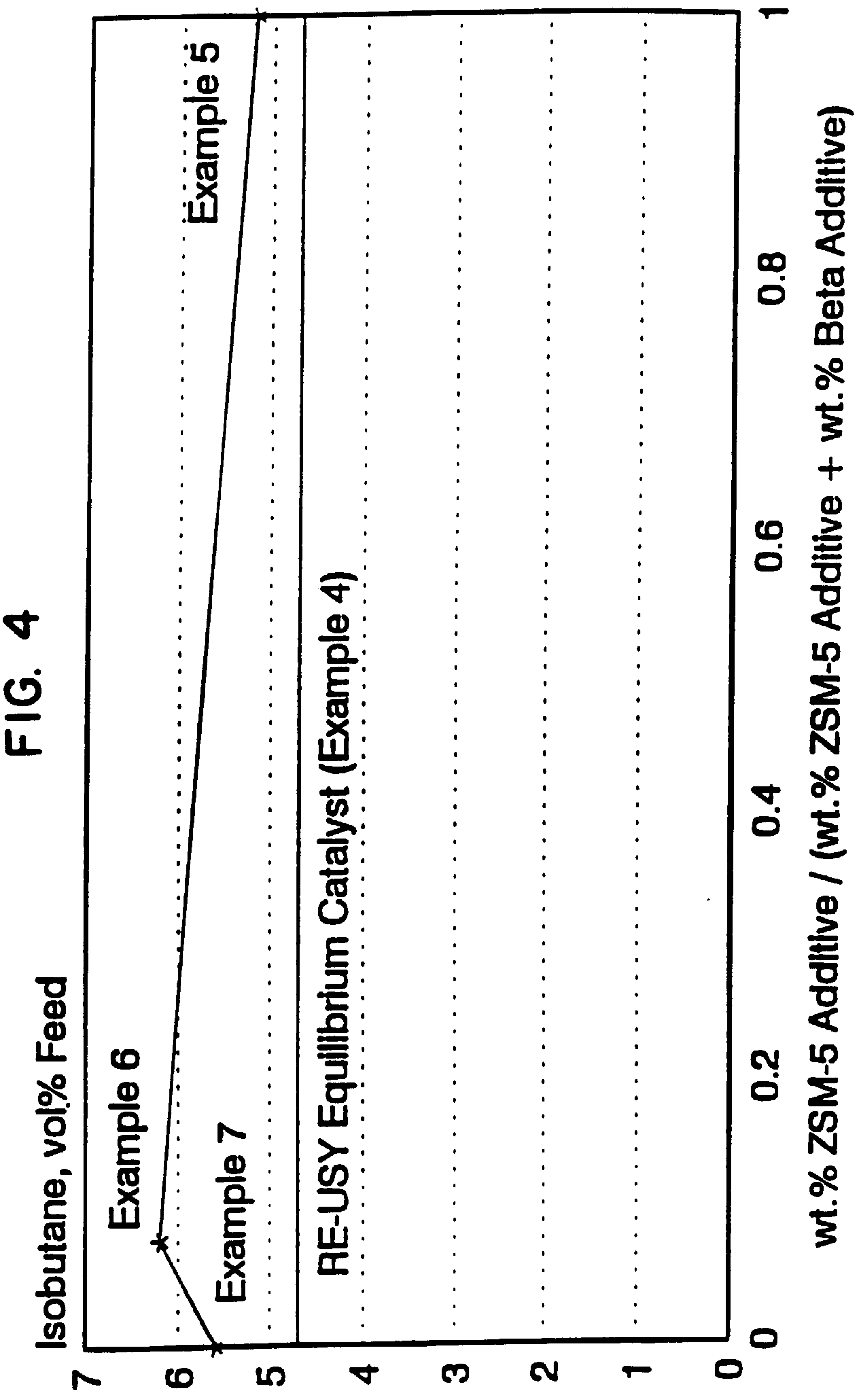

Isobutane, vol% Feed
Example 6
Example 7
Example 5
RE-USY Equilibrium Catalyst (Example 4)
0
1
2
3
4
5
6
7
0
0.2
0.4
0.6
0.8
1
wt.% ZSM-5 Additive / (wt.% ZSM-5 Additive + wt.% Beta Additive)

FIG. 5

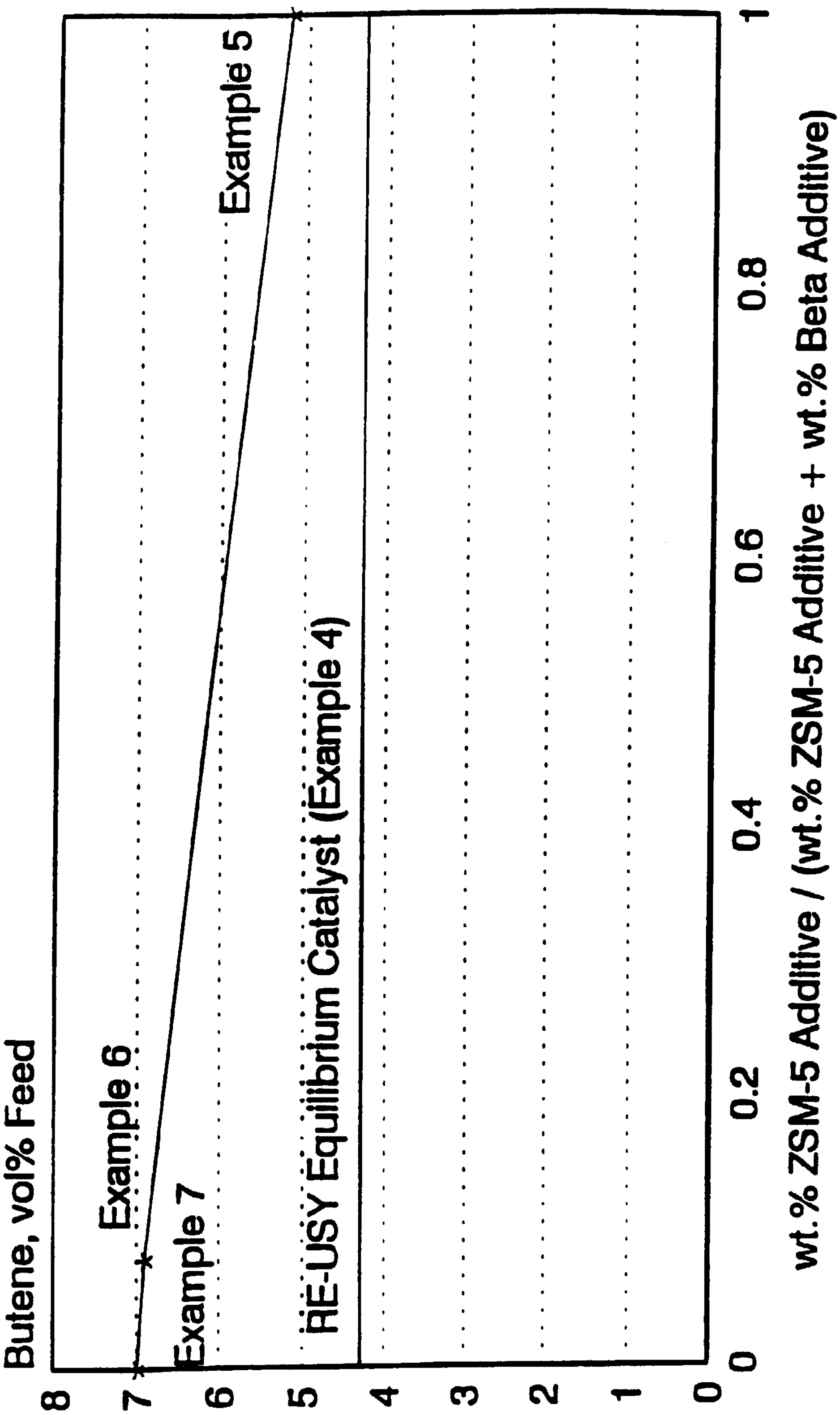
Butene, vol% Feed
8
7
6
5
4
3
2
1
0
Example 6
Example 7
Example 5
RE-USY Equilibrium Catalyst (Example 4)
0
0.2
0.4
0.6
0.8
1
wt.% ZSM-5 Additive / (wt.% ZSM-5 Additive + wt.% Beta Additive)

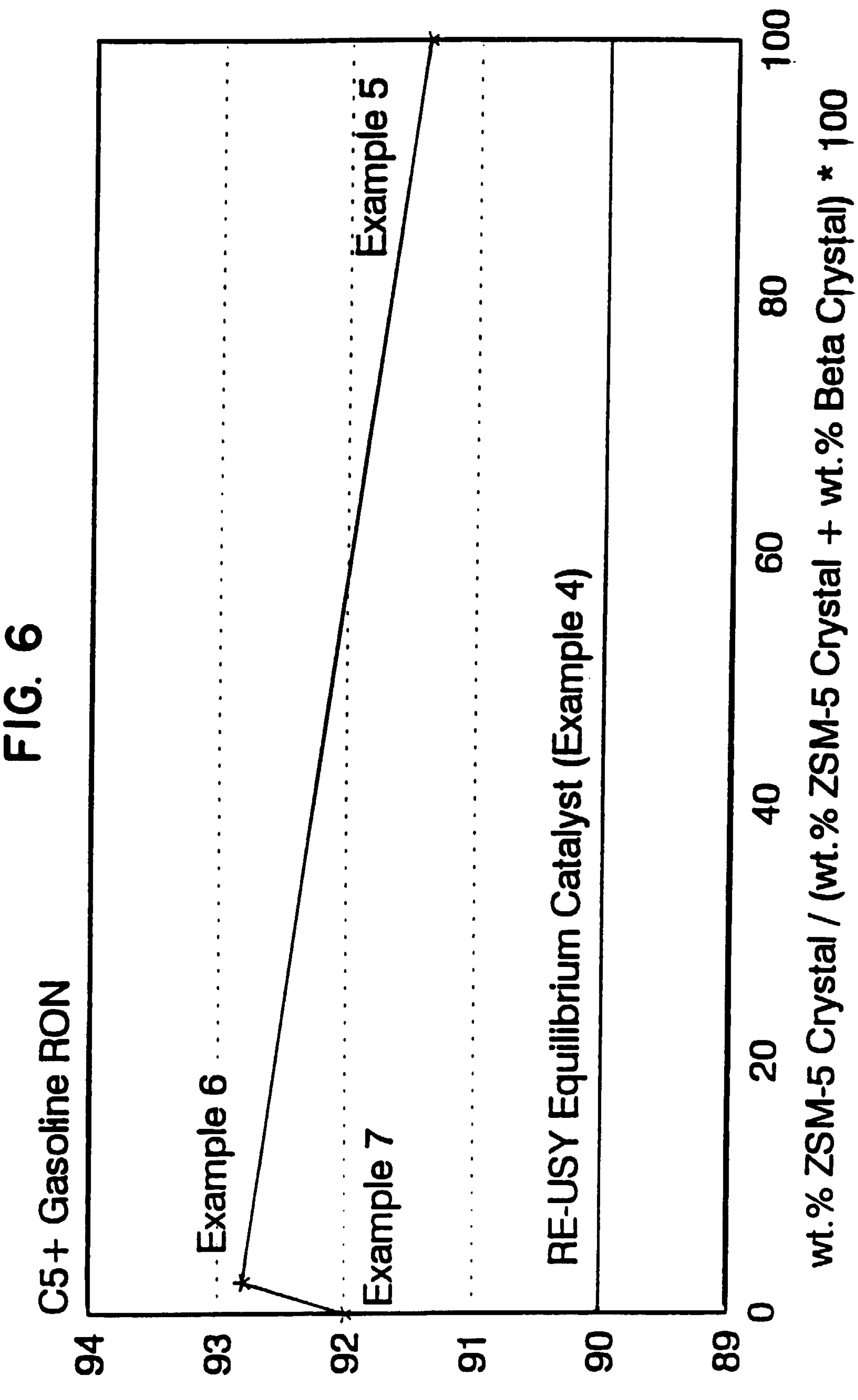
C5+ Gasoline RON
94
93
92
91
90
89
0
20
40
60
80
100
Example 6
Example 7
Example 5
RE-USY Equilibrium Catalyst (Example 4)
wt.% ZSM-5 Crystal / (wt.% ZSM-5 Crystal + wt.% Beta Crystal) * 100

FIG. 6

FIG. 7

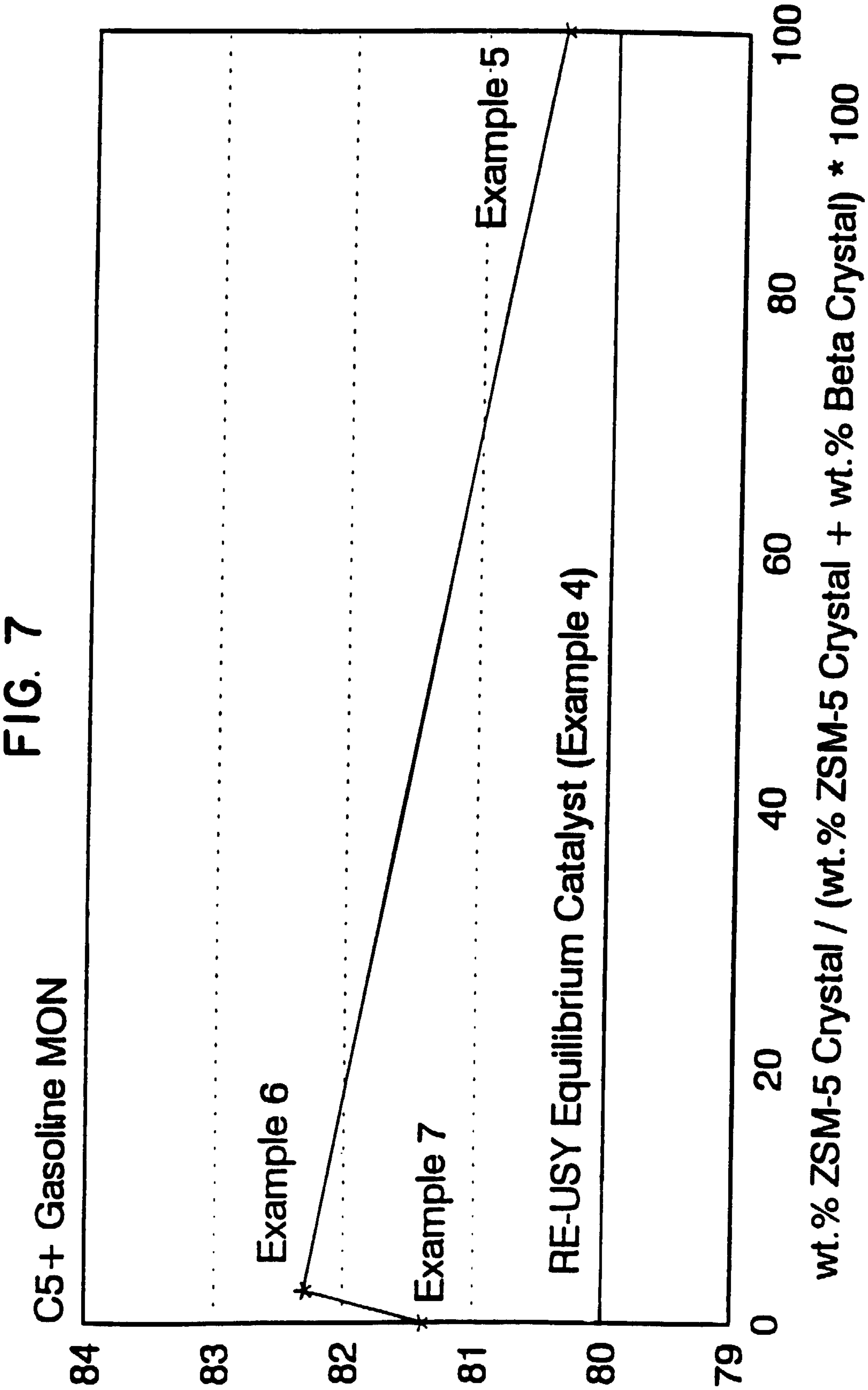
C5+ Gasoline MON
84
83
82
81
80
79
Example 6
Example 7
Example 5
RE-USY Equilibrium Catalyst (Example 4)
0
20
40
60
80
100
wt.% ZSM-5 Crystal / (wt.% ZSM-5 Crystal + wt.% Beta Crystal) * 100

FIG. 8

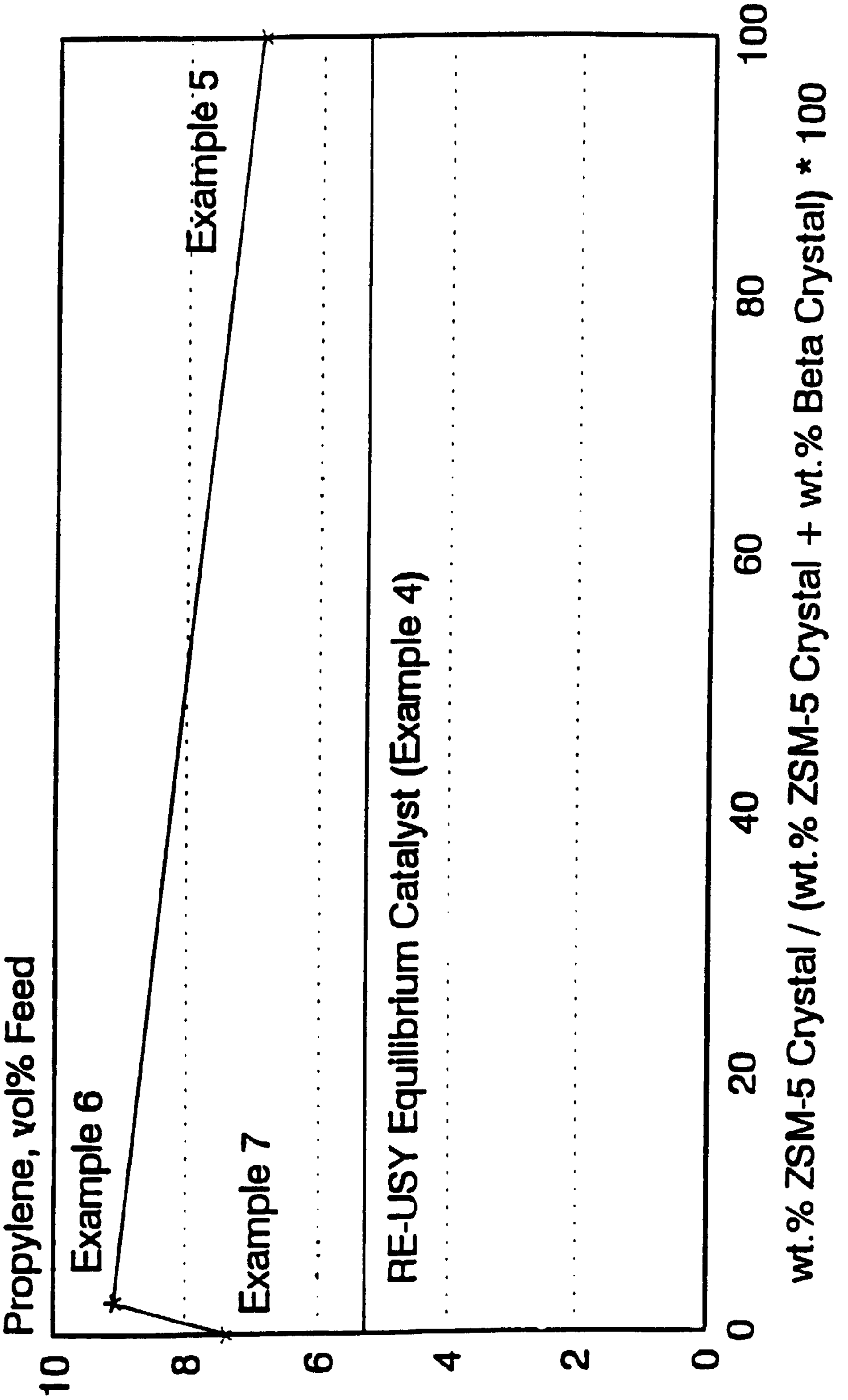
Propylene, vol% Feed
Example 6
Example 7
Example 5
RE-USY Equilibrium Catalyst (Example 4)
10
8
6
4
2
0
0
20
40
60
80
100
wt.% ZSM-5 Crystal / (wt.% ZSM-5 Crystal + wt.% Beta Crystal) * 100

FIG. 9

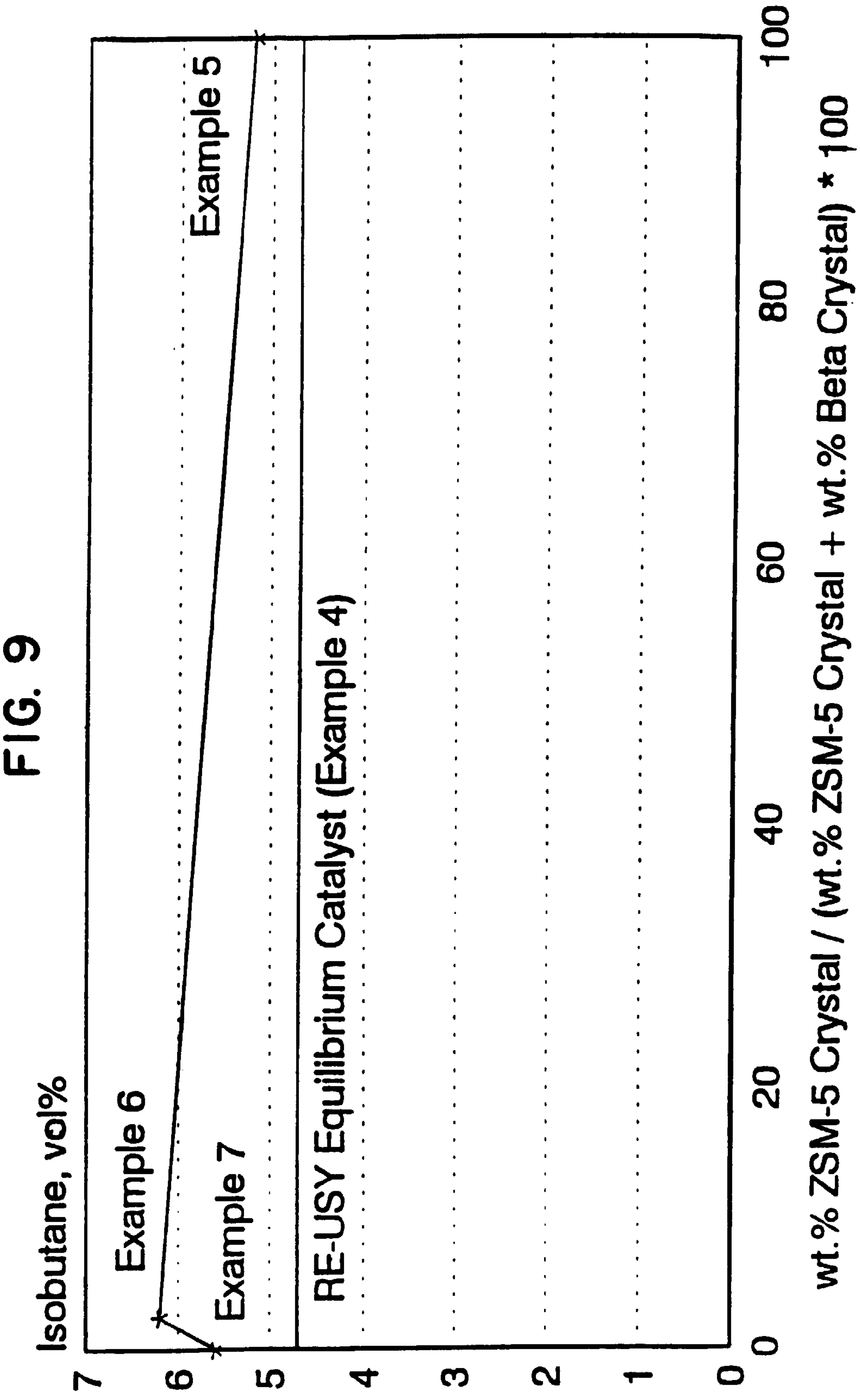
Isobutane, vol%
7
6
5
4
3
2
1
0
Example 6
Example 7
Example 5
RE-USY Equilibrium Catalyst (Example 4)
0
20
40
60
80
100
wt.% ZSM-5 Crystal / (wt.% ZSM-5 Crystal + wt.% Beta Crystal) * 100

FIG. 10

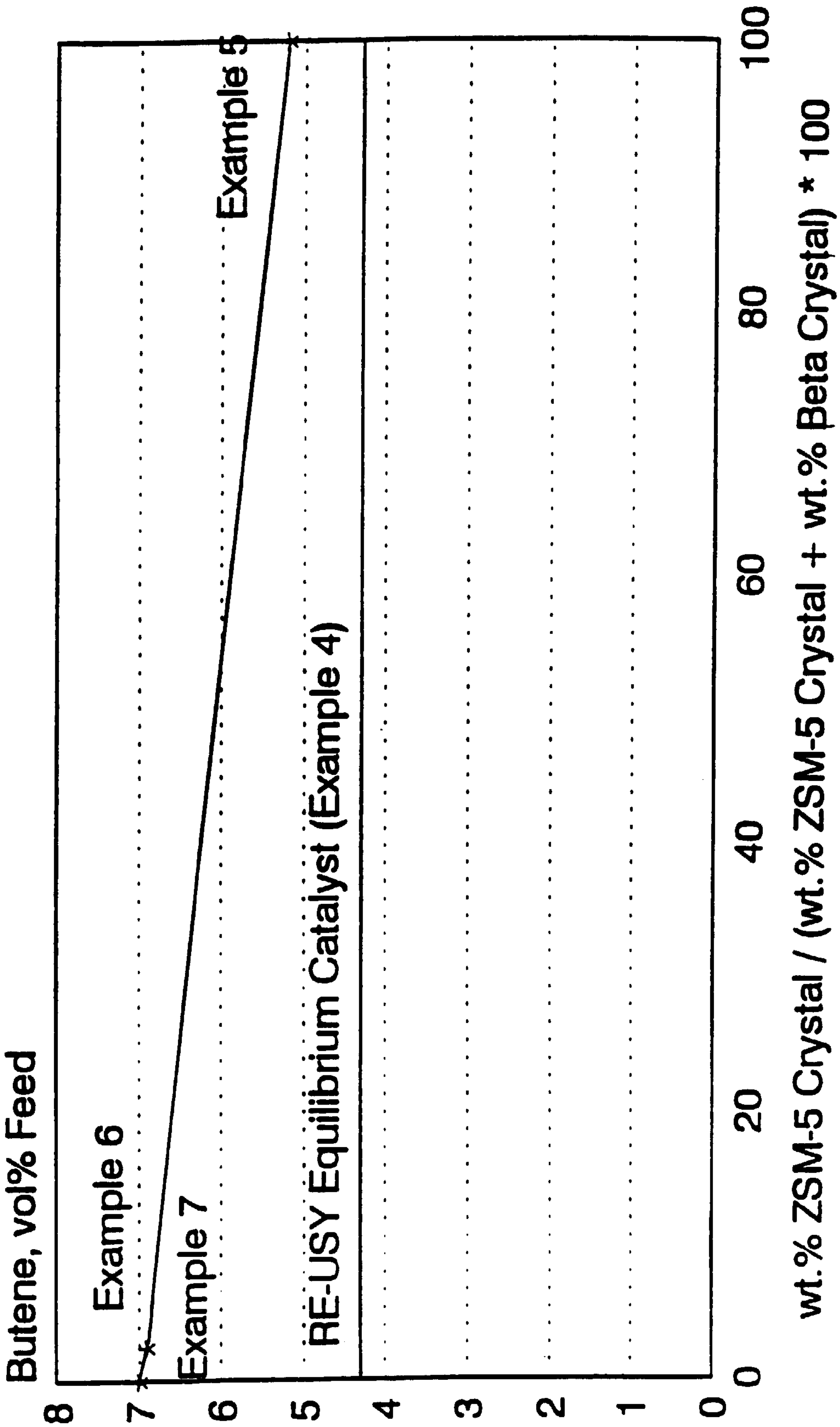
Butene, vol% Feed
Example 6
Example 7
Example 5
RE-USY Equilibrium Catalyst (Example 4)
0
1
2
3
4
5
6
7
8
0
20
40
60
80
100
wt.% ZSM-5 Crystal / (wt.% ZSM-5 Crystal + wt.% Beta Crystal) * 100

FIG. 11

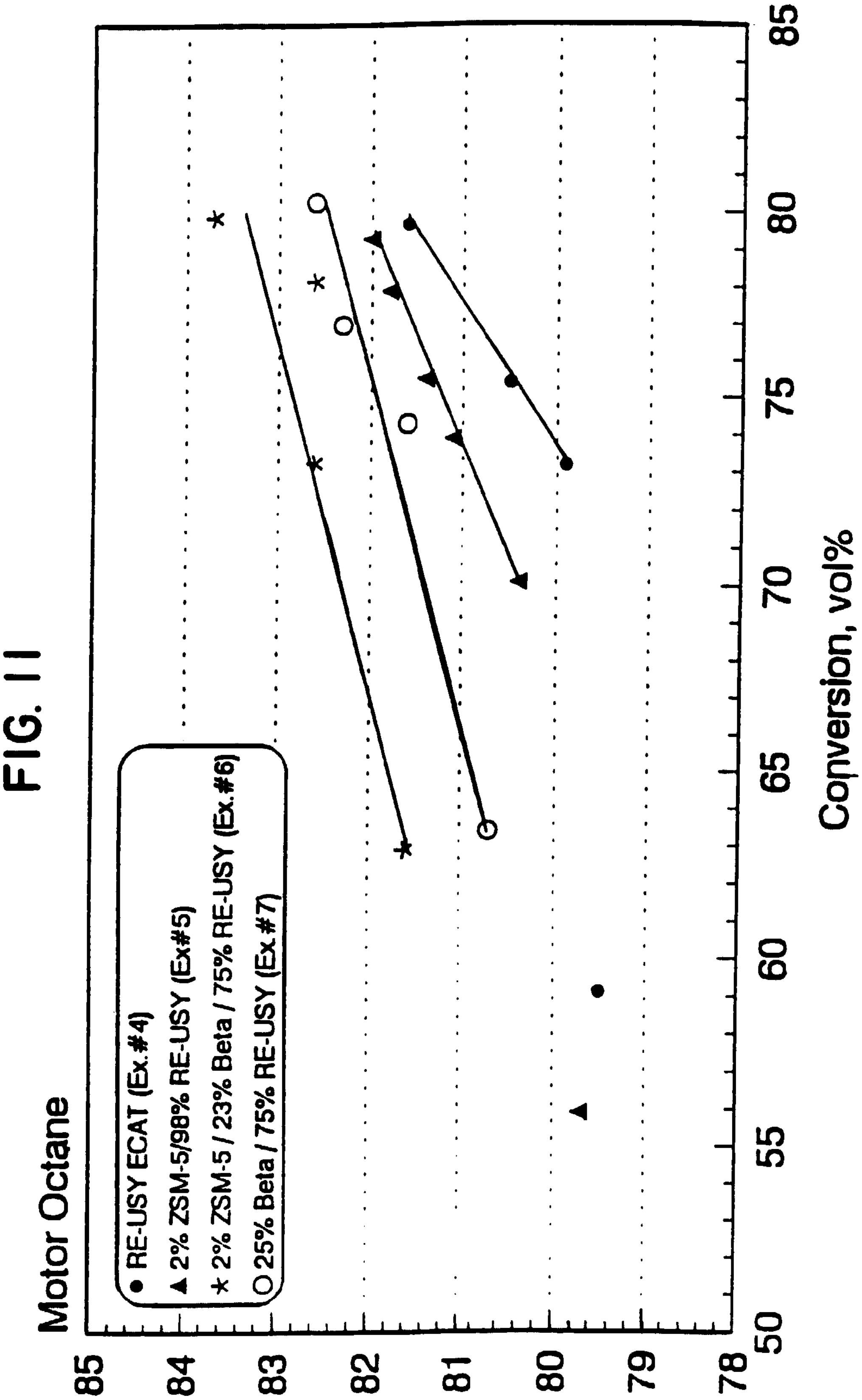
Motor Octane
85
84
83
82
81
80
79
78
50
55
60
65
70
75
80
85
Conversion, vol%
● RE-USY ECAT (Ex.#4)
▲ 2% ZSM-5/98% RE-USY (Ex#5)
✶ 2% ZSM-5 / 23% Beta / 75% RE-USY (Ex.#6)
○ 25% Beta / 75% RE-USY (Ex.#7)